# EUROPÄISCHE PATENTANMELDUNG

(11) **EP 3 932 551 A1**
(43) Veröffentlichungstag der Anmeldung: **05.01.2022**
(21) Anmeldenummer: 20183980.0
(22) Anmeldetag: 03.07.2020
(51) Int. Cl.: B01J 35/06, B01J 35/00, B01J 37/02, C02F 1/32, C01B 3/04, B01J 37/03, B01J 21/06, B01J 23/30, B01J 23/42, B01J 27/24, B01J 35/02, D06M 11/46, C25B 1/00, C25B 1/04, B01J 23/745

(54) **VERFAHREN ZUR HERSTELLUNG EINES KATALYTISCH AKTIVEN FILMES UND EIN MIT DIESEM VERFAHREN HERSTELLBAREN FILM**

(71) Anmelder: Technische Universität Berlin, 10623 Berlin (DE)
(72) Erfinder: DRIEß, Matthias, 10557 Berlin (DE); SCHOMÄCKER, Reinhard, 13589 Berlin (DE); SCHROETER, Michael, 12203 Berlin (DE); SCHWARZE, Michael, 12205 Berlin (DE); MENEZES, Prashant, 10587 Berlin (DE); WALTER, Carsten, 10557 Berlin (DE)
(74) Vertreter: Maikowski & Ninnemann Patentanwälte Partnerschaft mbB

(57) **Zusammenfassung**

Die vorliegende Erfindung betrifft ein Verfahren zur Herstellung eines katalytisch aktiven Filmes mit mindestens einem immobilisierten katalytisch aktiven Material, insbesondere mindestens einem photokatalytisch aktiven Material, umfassend die Schritte: Bereitstellen einer Dispersion von oberflächenmodifizierten Zellulosefasern, insbesondere Zellulosenanofasern, in einem Lösungsmittel; Zugabe von mindestens einem Katalysator, insbesondere mindestens einem pulverförmigen Katalysator, zu der Dispersion; Abtrennen des Feststoffes aus Zellulosefasern und pulverförmigen Katalysator vom Lösungsmittels; und Trocknen des abgetrennten Feststoffs aus Zellulosefasern und pulverförmigen Katalysator unter Ausbildung des katalytisch aktiven Filmes.

## Beschreibung

Die vorliegende Erfindung betrifft ein Verfahren zur Herstellung eines katalytisch aktiven Filmes und ein mit diesem Verfahren herstellbaren Films, sowie dessen Verwendung.

### Beschreibung

In photokatalytischen Anwendungen werden oft feine Pulver als Katalysatoren eingesetzt. Diese können im Labormaßstab noch als Suspension eingesetzt werden. Für kontinuierliche Anwendungen und auch für die Maßstabsvergrößerung müssen diese jedoch in Form eines Films immobilisiert werden.

In der Literatur finden sich unterschiedliche Verfahren, die mit Vor- und Nachteilen versehen sind. Zu den Standardmethoden gehören u.a. Drop-Coating (z.B. mit Nafion als Binder), Sol-Gel-Verfahren oder elektrophoretische Abscheidung. In letzter Zeit hat sich auch ein Ink-Verfahren etabliert, wo zunächst eine Tinte (Ink) mit dem Pulver hergestellt wird, welche im Anschluss aufgespritzt wird. Besonders bei der Maßstabsvergrößerung haben alle genannten Verfahren Nachteile in der Reproduzierbarkeit und der Haltbarkeit der immobilisierten Katalysatoren.

Die Aufgabe der vorliegenden Erfindung bestand somit darin, ein Verfahren bereitzustellen, mit welchem katalytisch aktive Filme reproduzierbar und kostengünstig hergestellt werden können.

Diese Aufgabe wird mit einem Verfahren mit den Merkmalen des Anspruchs 1 gelöst.

Entsprechend wird ein Verfahren zur Herstellung eines katalytisch aktiven Filmes mit mindestens einem immobilisierten katalytisch aktiven Material, insbesondere mindestens einem photokatalytisch aktiven Material, bereitgestellt, welches die folgenden Schritte umfasst:
- Bereitstellen einer Dispersion von oberflächenmodifizierten Zellulosefasern, insbesondere Zellusenanofasern, in einem Lösungsmittel;
- Zugabe von mindestens einem in der Dispersion stabilen Katalysator, insbesondere von mindestens einem in der Dispersion stabilen pulverförmigen Katalysator, zu der Dispersion;
- Behandlung des Gemisches aus Zellulosefasern und Katalysator bis sich eine homogene Suspension ergibt;
- Abtrennen des Feststoffes aus Zellulosefasern und pulverförmigen Katalysator vom Lösungsmittels; und
- Trocknen des abgetrennten Feststoffs aus Zellulosefasern und pulverförmigen Katalysator unter Ausbildung des katalytisch aktiven Filmes.

Die Erfindung beschreibt eine neue Methode zur Herstellung von katalytisch aktiven Katalysatorfilmen, welche die Selbstaggregation von Zellulosefasern ausnutzt. Diese Methode ist sehr einfach und ermöglicht die Herstellung der Filme in kurzer Zeit und verschiedenen Größen. Dabei werden die Zellulosefasern zunächst in einem geeigneten Lösungsmittel dispergiert und dann mit dem Katalysatorpulver versetzt. Es ist auch möglich Zellulosefasern und das Katalysatorpulver zeitgleich zu dispergieren. Dadurch wird eine Suspension erhalten, die anschließend auf verschiedene Weise unter Ausbildung eines katalytisch aktiven Films gehanhabt werden kann.

In einer Ausführungsform weisen die oberflächenmodifizierten Zellulosefasern, insbesondere Zellulosenanofasern, eine Faserlänge zwischen 0,5 und 3 µm, bevorzugt zwischen 1 und 2 µm, und einen Durchmesser zwischen 15 und 50 nm, bevorzugt zwischen 20 und 40 nm auf. Die verwendeten Zellulosefasern sind somit durch ein "high-aspect ratio" gekennzeichnet.

Bevorzugt werden Zellulosefasern verwendet, die aus einem Manteltier (Tunicata) gewonnen bzw. isoliert werden. Manteltiere leben als sessile Tiere auf dem Meeresboden (Seescheiden) oder planktonisch (Salpen, Appendikularien). Ihr Name leitet sich von einem Mantel (*Tunica*) aus Tunicin (Cellulose) ab. Im vorliegenden Verfahren kommen bevorzugt Zellulosefasern der Ostasiatischen Seescheide (Styela Clava) zur Anwendung.

In einer weiteren Ausführungsform ist die Oberfläche der Zellulosefasern mit anionischen Gruppen, bevorzugt mit Sulfatgruppen, modifiziert. Es sind auch andere Modifikationen, in denen die funktionellen Gruppen (-OH Gruppen) der Zellulose reagieren, möglich. Weitere Möglichkeiten der Funktionalisierung finden sich in der Literatur, z.B. in Eyley and Thielemans, Nanoscale 6, 2014, 7764 und Moon et al., Chem. Soc. Rev. 40, 2011, 3941.

Der aus Elementaranalyse bestimmte Modifizierungsgrad bzw. Funktionalisierungsgrad der Faseroberfläche mit einer anionischen Gruppe, insbesondere mit einer Sulfatgruppe, liegt zwischen 0,05 und 0,3 %, bevorzugt zwischen 0,1 und 0,2 %.

In einer Ausführungsform werden die Zellulosefasern in einem wässrigen Lösungsmittel bzw. Lösungsmittelgemisch, z.B. Wasser oder Wasser/Methanol (v/v = 30/70), mit einer Konzentration von Zellulosefasern im Bereich von 0.25 - 5 g/L dispergiert.

In einer besonders bevorzugten Ausführungsform ist der mindestens eine Katalysator ein Photokatalysator. Beispiele für geeignete Photokatalysatoren sind TiO₂, WO₃, Kohlenstoffnitrid (CN) sowie deren Modifikationen mit einem Co-Katalysator wie Platin, z.B. Pt@TiO₂. Als Photokatalysatoren können aber alle in der Literatur beschriebenen in der Dispersion stabilen pulverförmigen Materialien eingesetzt werden, sofern sie eine homogene Suspension mit der Zellulose bilden.

In einer weiteren Ausführungsform wird der pulverförmige Katalysator zu der Dispersion in einem Katalysator/Zellulosefaser-Verhältnis gegeben, so dass die Konzentration des Katalysators ≤ 4 g/g, bevorzugt 0,5 - 4 g/g, insbesondere bevorzugt 1-3 g/g beträgt.

In einer noch weiteren Ausführungsform wird das Gemisch aus Zellulosefasern und Katalysator bei Raumtemperatur, z.B. mit einem Ultraschallbad, behandelt, bis sich eine homogene Suspension ergibt.

Wie oben bereits erwähnt, wird der Feststoff aus Zellulosefasern und pulverförmigen Katalysator vom Lösungsmittel abgetrennt. Dies kann mittels Zentrifugation oder Filtration erfolgen.

Der sich anschließende Schritt des Trocknens des abgetrennten Feststoffs aus Zellulosefasern und pulverförmigen Katalysator unter Ausbildung des katalytisch aktiven Filmes kann auf verschiedene Weise erfolgen.

So kann gemäß einer Variante der abgetrennte Feststoff aus Zellulosefasern und pulverförmigen Katalysator auf einem Trägermaterial, bevorzugt einem porösen Träger wie Zellulosefilter (Filterpapier) oder Metallschaum wie Nickelschaum, getrocknet werden. Hierzu kann der Feststoff ohne Vakuum auf einem porösen Filter abgeschieden werden oder durch einen porösen Filter (mit Vakuum) filtriert werden.

In einer anderen Variante ist es möglich, dass der abgetrennte Feststoff aus Zellulosefasern und pulverförmigen Katalysator nicht auf einem Trägermaterial getrocknet wird. Hierzu kann der Feststoff z.B. ohne Vakuum bei erhöhter Temperatur z.B. 60°C getrocknet werden. In diesem Fall bildet der Film eine stabile, selbsttragende Membran aus. Die Temperatur ist so zu wählen, dass es zu keinem Sieden des Lösungsmittels kommt, da dies sich auf die Qualität der Membran auswirkt.

In allen Methoden werden nach dem Dispergieren der Zellulosefasern die Selbstaggregationseigenschaften der Zellulosefasern beim Trocknen ausgenutzt. So wird in der ersten Variante eine Vernetzung untereinander sowie mit dem porösen Träger erreicht. In der zweiten Variante findet die Vernetzung der Zellulosefasern ausschließlich untereinander statt. Bei der Vernetzung der Zellulosefasern wird das Katalysatorpulver eingeschlossen und immobilisiert.

Das vorliegende Verfahren ermöglicht die Herstellung eines katalytisch aktiven Films mit mindestens einem immobilisierten katalytisch aktiven Material umfassend oberflächenmodifizierte Zellulosefasern und mindestens einen Katalysator, insbesondere mindestens einen Photokatalysator.

Der Film umfasst oberflächenmodifizierte Zellulosefasern, die eine Faserlänge zwischen 0,5 und 3 µm, bevorzugt zwischen 1 und 2 µm, und einen Durchmesser zwischen 15 und 50 nm, bevorzugt zwischen 20 und 40 nm aufweisen. Die Oberfläche der Zellulosefasern ist mit anionischen Gruppen, bevorzugt mit Sulfatgruppen, modifiziert.

In einer Ausführungsform weist der katalytisch aktive Film eine Dicke zwischen 50 und 500 µm, bevorzugt zwischen 80 und 300 µm, insbesondere bevorzugt zwischen 100 und 200 µm auf.

In einer weiteren Ausführungsform ist der katalytisch aktive Film auf einem Trägermaterial, bevorzugt einem porösen Träger wie Zellulosefilter oder Metallschaum wie Nickelschaum, angeordnet.

In einer anderen Ausführungsform liegt der katalytisch aktive Film als stabile, selbsttragende Membran vor.

Der vorliegende Film kann für verschiedene Katalysezwecke, insbesondere zur Photokatalyse, bevorzugt zur photokatalytischen Wasserstoffherstellung oder zur Wasserdekontamination verwendet werden.

Die Erfindung wird nachfolgend anhand von Ausführungsbeispielen unter Bezugnahme auf die Figuren näher erläutert. Es zeigen:
- FIGUR 1: Suspension aus Zellulose und Kohlenstoffnitrid (A), Suspension in der Teflonschale (B), und fertige Membran nach der Trocknung (C, D);
- FIGUR 2: Beispiele für katalytische Membranen mit folgenden heterogenen Katalysatoren: Pt@TiO_{2, PC500}, Kohlenstoffnitrid (CN), Wolframoxid (WO₃) und Pt@Al₂O₃. Durchmesser waren 5 cm für Pt@TiO₂ / WO3 und 2,5 cm für CN / Pt@Al₂O₃;
- FIGUR 3: Herstellung eines Kohlenstoffnitrid-Films auf einem Zellulosefilter. Dispergierte Zellulose (A), Suspension aus Zellulose und Kohlenstoffnitrid (B), während der Filtration durch einen Zellulosefilter (C) und immobilisierter Kohlenstoffnitrid-Film (D);
- FIGUR 4: Herstellung eines Kohlenstoffnitrid-Films (30 mg CN) auf einem Nickelschaum mit unterschiedlichen Mengen an Zellulosefasern (A: 17,5 mg, B: 35 mg);
- FIGUR 5: Kohlenstoffnitrid-Photokatalysator auf dem Zellulosefilter nach der Filtration der Suspension (A), nach 5 min im Ultraschallbad (B) und Katalysatorfilm nach Entnahme aus der Lösung (ungetrocknet) (C). In (A) - (C) erfolgte die Herstellung mit Zellulose (links) und ohne Zellulose (rechts);
- FIGUR 6: REM-Aufnahmen von Pt@TiO₂, _{PC500} immobilisiert auf einem Zellulosefilter vor (a,c) und nach (b,d) der Reation. Länge des Maßstabsbalkens: 1 µm (a,b) und 50 µm (c,d);
- FIGUR 7: REM-Aufnahmen von Pt@sg-CN immobilisiert auf einem Zellulosefilter vor (a,c) und nach (b,d) der Reation. Länge des Maßstabsbalkens: 1 µm (a,b) und 50 µm (c,d).
- FIGUR 8: Pt@sg-CN immobilisert auf einem Zellulosefilter vor (links) und nach der Reaktion (rechts);
- FIGUR 9: Wasserstoffproduktion mit einem Kohlenstoffnitrid-Film immobilisiert auf Zellulosefilter mit verschiedenen Beladungen des Katalysators;
- FIGUR 10: Selbsttragende Membran mit Pt@TiO₂ fixiert zwischen zwei Gummiringen vor der Reaktion (A), direkt nach der Reaktion (B) und nach dem Trocknen an der Luft (C);
- FIGUR 11: Zellulosemembran nach Bestrahlung mit einer Lampe mit gebündeltem Licht; und
- FIGUR 12: POM Photokatalysator auf Zellulosefilter (A), Filterpaper im Reaktor (B), nach Zugabe der 10 ppm Methylenblau-Lösung (C) und Katalysatorfilm sowie Lösung nach 2h Bestrahlung mit einer Weißlich-LED (D).

### Herstellung der oberflächenmodifizierten Zellulosenanofasern

Die in dem vorliegenden Verfahren verwendeten Zellulosenanofasern werden aus der ostasiatischen Seescheide (Styela Clava) in Anlehnung an ein Verfahren beschrieben von Berg et al. (Biomacromolecules 2007, 8, 1353 - 1357) isoliert.

Nach Ausnehmen der Seescheide werden die äußeren Wände der Seescheide durch Erhitzen in wässriger Kaliumhydroxyd-Lösung (80 °C, 24 h) unter mechanischem Einfluss entfernt. Nach Waschen der rohen Zellulose mit Wasser und Einstellen des pH-Wertes auf 7 werden Wasser, Essigsäure und Natriumhypochloritlösung (> 4% Chlor) zugegeben und die Temperatur auf 60 °C erhöht. In einstündigen Intervallen werden weitere Mengen an Essigsäure und Natriumhypochloritlösung zugegeben bis das Material eine weiße Farbe aufweist. Abschließend werden die gebleichten und proteinfreien Fasern mit Wasser gewaschen und in einem Mischer unter Ausbildung eines feinen Zellulosebreies aufgelöst.

Zur Funktionalisierung mit einer Sulfatgruppe wird die Zellulose in Wasser gegeben (25 - 40 g/L) und langsam Schwefelsäure (50 %) dazugetropft. Die Dispersion wird auf 60 °C erwärmt und für 120 Minuten bei dieser Temperatur unter Rühren gehalten. Anschließend erfolgt eine Abkühlung der Dispersion auf 0 °C, gefolgt von einer Filtration oder Zentrifugation und Waschen der Zellulosefasern bis zur Neutralität mit Wasser. Abschließend werden die funktionalisierten Zellulosefasern in Wasser dispergiert und gefriergetrocknet. Wird die Suspension z.B. durch eine Glasfritte filtriert, so ist die Gesamtausbeute an Zellulose höher, da beim Zentrifugieren und Aufarbeiten der Phasen immer Verluste entstehen.

### Herstellung des katalvtisch aktiven Films

Die Herstellung eines katalytisch aktiven Filmes mit Hilfe der Zellulosefasern kann auf unterschiedliche Wege erfolgen, wobei zwischen "selbsttragenden" Membranen (a) und "immobilisierten" Filmen (b) unterschieden werden kann. Die Erfahrungen haben gezeigt, dass besonders bei den selbsttragenden Membranen die Qualität sehr stark von dem Batch an modifizierter Zellulose (im Folgenden als ModCe bezeichnet) abhängt. Trotz gleichbleibenden Bedingungen bei der Behandlung der Zellulose mit Schwefelsäure kann es zu Abweichungen in der Qualität der ModCe kommen. Die unterschiedliche Qualität der ModCe hat keinen Einfluss auf das Verfahren an sich, sondern nur auf die Konzentrationen, die für die Herstellung und Stabilität des Films notwendig sind.

### a) Selbstragende Membranen

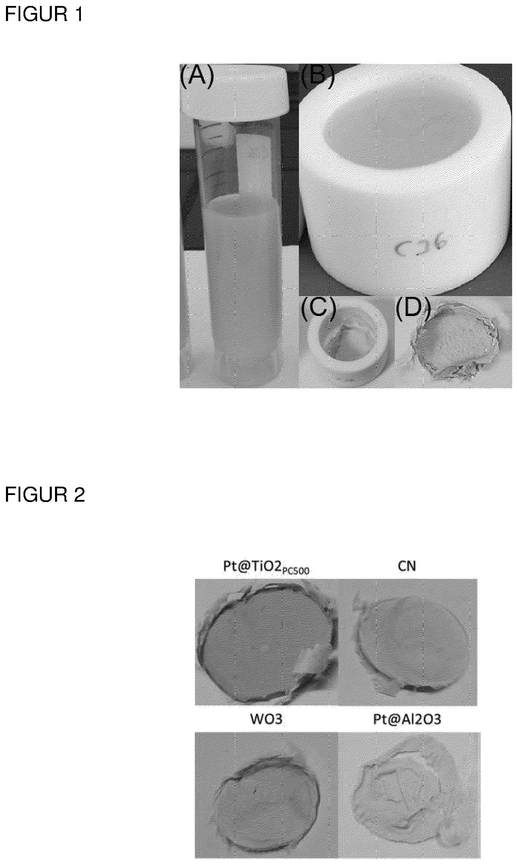

Bei der Herstellung von selbsttragenden Membranen (d ≈ 5 cm) wird zunächst die ModCe (z.B. 70 mg) in einem geeigneten Lösungsmittel (z.B. Wasser oder Wasser/Methanol (v/v = 30/70), 20 mL) dispergiert und anschließend mit dem Katalysator (z.B. 60 mg) versetzt. Die Einsatzmengen hängen dabei von der gewünschten Membranfläche ab und müssen entsprechend angepasst werden. Um die Membran später von der Oberfläche abtrennen zu können, werden Teflonschalen mit dem gewünschten Durchmesser verwendet. Die Suspension (FIGUR 1A) wird in die Teflonschale gegeben (FIGUR 1B) und im Ofen bei geringer Temperatur (60 °C) getrocknet, so dass sich die Membran ausbildet (FIGUR 1C und D). Die Temperatur muss so gewählt werden, dass die Flüssigkeit nicht anfängt zu verdampfen, da die Membran ansonsten durch Siedestöße löchrig wird. Um die Zeit für das Trocknen zu reduzieren, kann das Flüssigkeitsvolumen durch Zentrifugieren verringert werden. Dabei kann sowohl ein Teil der Zellulose als auch des dispergierten Katalysators mit der überschüssigen Flüssigphase verloren gehen. Für hergestellte Kompositmembranen aus Zellulose und Kohlenstoffnitrid können Masseverluste von ca. 20-30% (überwiegend Zellulose) auftreten. Verluste können jedoch vermieden werden, wenn die gesamte Suspension getrocknet wird. Mit Hilfe der beschriebenen Vorgehensweise können unterschiedliche Katalysatoren immobilisiert werden (FIGUR 2). Als Beispiel wurden Membranen aus Cellulose und den beiden Photokatalysatoren Pt@TiO₂ und WO₃ mit einem Durchmesser von 2,5 cm sowie Membranen aus Cellulose und dem Photokatalysator CN und dem Hydrierkatalysator Pt@Al₂O₃ mit einem Durchmesser von 5 cm hergestellt. Die Qualität der Membran hängt dabei neben den Einsatzmengen an Zellulose und Katalysator auch sehr stark von den Wechselwirkungen zwischen der Zellulose und dem Katalysatorpulver ab.

### b) Immobilisierte Katalysatorfilme

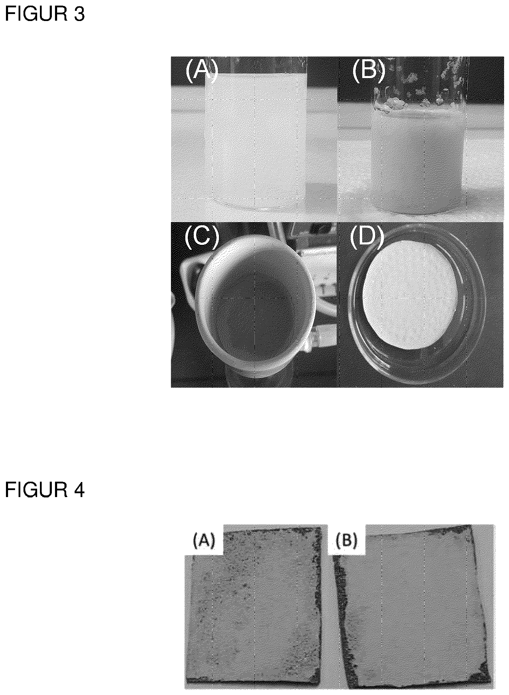

Immobilisierte Katalysatorfilme können auf unterschiedlichen porösen Substraten (z.B. einem Zellulosefilter oder Nickelschaumplatte) hergestellt werden. Der erste Schritt ist die Herstellung einer Suspension aus ModCe und dem Katalysatorpulver. Der zweite Schritt ist die Immobilisierung des Katalysatorfilms. Für den zweiten Schritt gibt es unterschiedliche Ausführungen. In einer ersten Ausführung wird die Suspension durch eine poröse Zellulosemembran filtriert (FIGUR 3). Die Filtration kann sowohl durch das Anlegen eines Unter- als auch Überdruckes erfolgen. Die Zellulosekonzentration hat einen Einfluss auf den Katalysatorfilm. Die Zellulosekonzentration (in mg/cm²) sollte nicht zu groß sein, da sonst keine Vernetzung mit dem Zellulosefilter, sondern hauptsächlich untereinander stattfindet. Bei zu hoher Zellulosekonzentration erhält man eine selbsttragende Membran auf dem Zellulosefilter. Die dafür benötigte Zellulosekonzentration hängt vom Zellulose-Batch ab. Die Katalysatorkonzentration sollte der Zellulosekonzentration anschließend angepasst werden.

In einer zweiten Ausführung wird die Suspension in Gegenwart des porösen Substrates getrocknet (FIGUR 4). Dazu kann z.B. die Zellulose-Suspension soweit aufkonzentriert werden, dass ein Zellulosebrei des Photokatalysators erhalten wird, der auf das poröse Substrat aufgestrichen wird. Diese Technik entspricht der klassischen Herstellung von Papier.

In beiden Fällen vernetzen sich beim Trocknen die Zellulosefasern mit dem porösen Grundgerüst des Substrates und immobilisieren so das Katalysatorpulver. Etwas mehr Zellulosefasern sorgen für eine bessere Verteilung des Katalysators in der Suspension und für einen homogeneren Film auf dem porösen Substrat (FIGUR 4B).

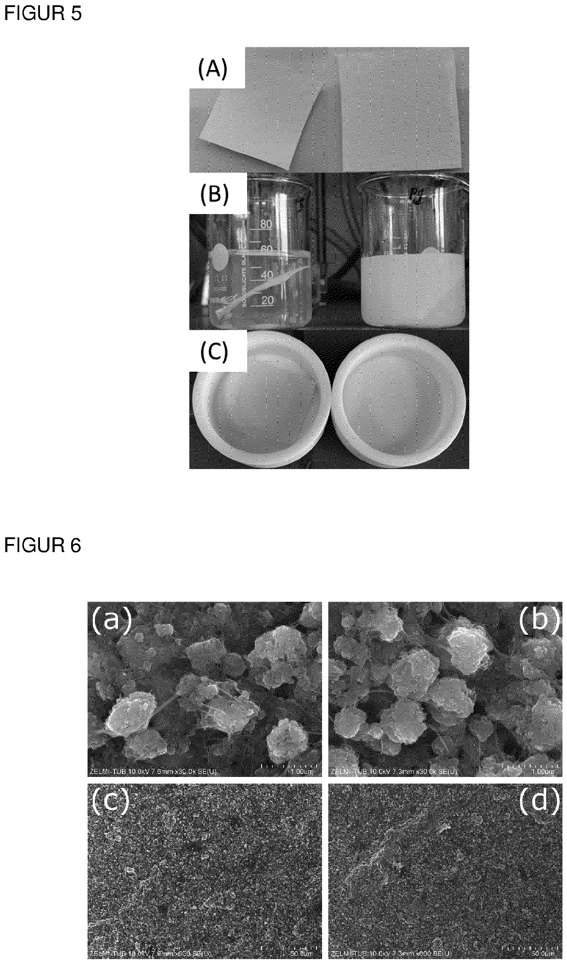

Es ist nicht möglich einen stabilen Film nur durch die Filtration eines suspendierten Photokatalysators in Abwesenheit der dispergierten Zellulosefasern zu erhalten. Es bildet sich in Abwesenheit der Zellulosefasern während der Filtration der Suspension nur eine Schicht des abgetrennten Photokatalysators auf dem Zellulosefilter, die durch mechanische Belastung leicht abgelöst wird (FIGUR 5).

### Anwendung des katalvtisch aktiven Films

Es wurden Katalysatorfilme nach der oben beschriebenen Methode hergestellt und für unterschiedliche photokatalytsche Reaktionen eingesetzt. Im Folgenden werden beispielhafte Ergebnisse für die photokatalytische Wasserspaltung und dem photokatalytischen Abbau von gelösten Schadstoffen gezeigt.

Die photokatalytische Wasserspaltung kann mit immobilisierten Katalysatorfilmen und mit selbsttragenden Membranen durchgeführt werden.

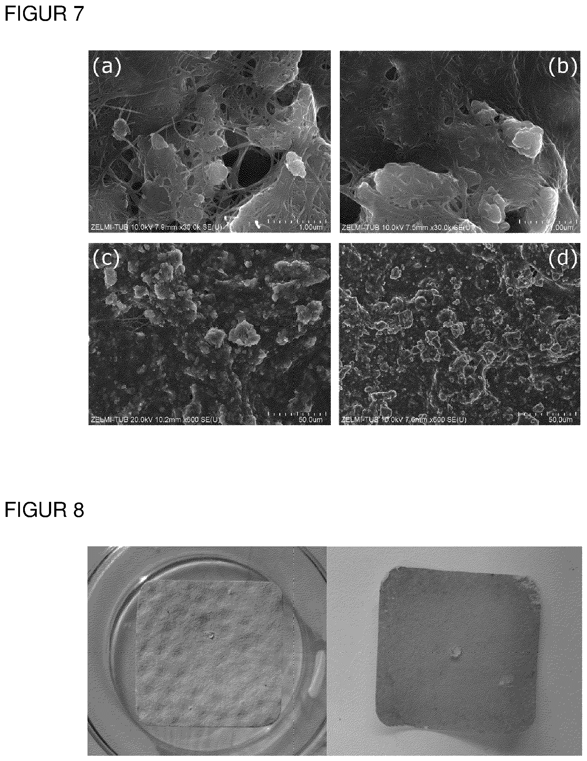

Für die beiden Photokatalysatoren Pt@TiO₂, _{PC500} und Pt@sg-CN wurden Katalysatorfilme auf Zellulosefiltern immobilisiert. Die Katalysatorfilme blieben während der Reaktion stabil, was die rasterelektromikroskopischen (REM) Aufnahmen (FIGUR 6, FIGUR 7) sowie die Optik des Films (FIGUR 8) zeigen. Die Wasserstoffproduktion wurde in einem Standardreaktor, wie er von Schwarze et al. (Phys. Chem. Chem. Phys., 2013, 15, 3466-3472) beschrieben wurde, vermessen. Bei diesem Reaktor erfolgt die Bestrahlung von der Seite durch ein planares Quartzglasfenster und der entstehende Wasserstoff sorgt für einen messbaren Druckanstieg. Durch eine Probe der Gasphase nach der Reaktion und Analyse durch einen Gaschromatographen kann der Wasserstoffgehalt gemessen werden.

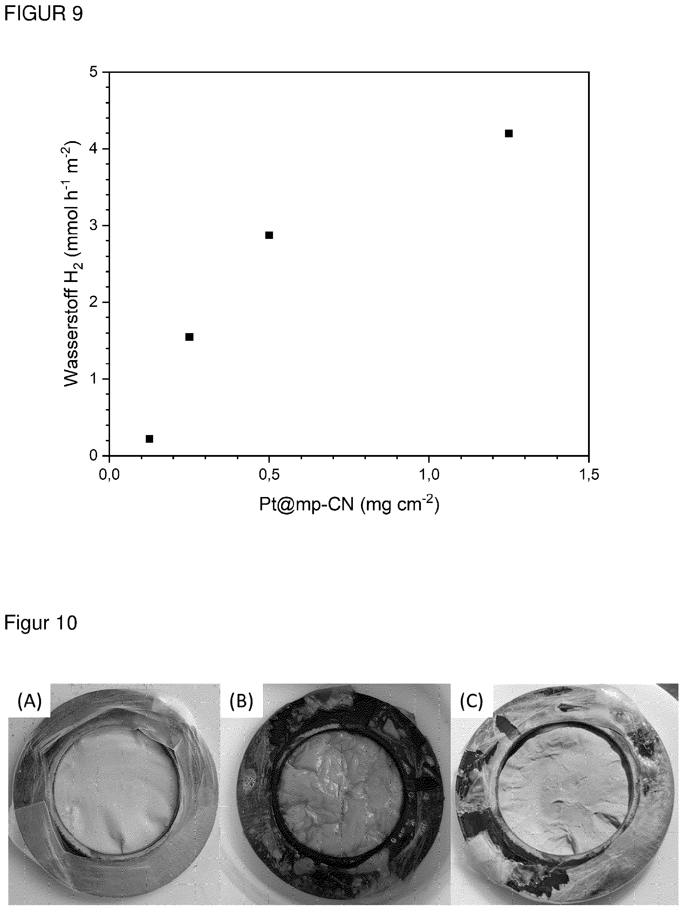

In einigen Fällen ist die Aktivität des Films so groß, dass sich deutliche Gasblasen zeigen (nicht gezeigt). Die Aktivität des Katalysatorfilms hängt von der Menge des Katalysators ab. Eine etwas höhere Wasserstoffproduktion wurde beobachtet, wenn sich der Film aufgrund einer zu hohen Zellulosekonzentration vom Zellulosefilter ablöste. Für einen Pt@mp-CN-Film ergaben sich bei Bestrahlung mit einem Sonnenlichtsimulator die in FIGUR 9 gezeigten flächenbezogenen Wasserstoffraten. Die Bestrahlungsfläche betrug ca. 12 cm². Mit einem Pt@TiO₂-Film (Zellulose: 1,2 mg/cm²; Katalysator: 1,1 mg/cm²) unter UV-Bestrahlung konnten deutliche höhere Wasserstoffraten (55,7 mmol h⁻¹ m⁻²) erhalten werden.

Für den Photokatalysator Pt@TiO₂ wurde eine selbsttragende Membran hergestellt (Zellulose: 2,6 mg/cm²; Katalysator: 2,2 mg/cm²) und in einem Photoreaktor vermessen, bei dem die Bestrahlung von oben durch ein Quartzglasfenster erfolgte. Für eine Bestrahlungsfläche während des Versuchs von 4,9 cm² wurde unter Verwendung einer 300 W Xenon-Lampe (gesamtes Lampenspektrum) eine Wasserstoffproduktion von ca. 84 mmol h⁻¹ m⁻² erhalten. Die Membran blieb stabil (FIGUR 10).

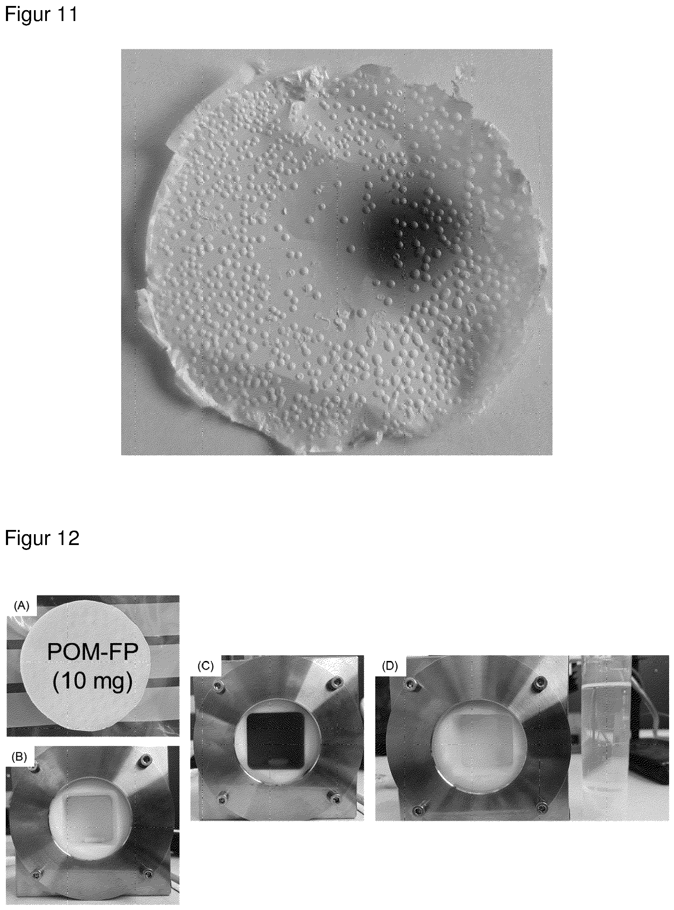

Da es sich bei den hergestellten selbstragenden Membranen technisch gesehen um Papier handelt, verhalten sich die selbsttragenden Membranen entsprechend. Stark gebündeltes Licht oder zu hohe Temperaturen bzw. Bedingungen, bei denen die Zellulosefasern selber reagieren können, sollten daher vermieden werden (FIGUR 11).

Neben der Herstellung von Wasserstoff, wurde auch ein Versuch zur Dekontamination von Wasser unternommen. Dazu wurde eine Eisen-basiertes Superfulleren als Photokatalysator auf dem Zellulosefilter immobilisiert und für den photokatalytischen Abbau von Methylenblau erfolgreich getestet (Figur 12). Die Bestrahlung erfolgte mit einer Weiß-Licht LED (400 - 800 nm) und nach einer Bestrahlungszeit von 2h war die Lösung entfärbt. Der Katalysatorfilm blieb intakt. Auch für den photokatalytischen Abbau von Diclofenac konnte ein nach dem beschrieben Verfahren hergestellter mp-CN-Film erfolgreich eingesetzt werden.

## Patentansprüche

1. Verfahren zur Herstellung eines katalytisch aktiven Filmes mit mindestens einem immobilisierten katalytisch aktiven Material
umfassend die Schritte:
- Bereitstellen einer Dispersion von oberflächenmodifizierten Zellulosefasern in einem Lösungsmittel;
- Zugabe von mindestens einem in der Dispersion stabilen Katalysator, insbesondere von mindestens einem in der Dispersion stabilen pulverförmigen Katalysator, zu der Dispersion;
- Behandlung des Gemisches aus Zellulosefasern und Katalysator bis sich eine homogene Suspension ergibt;
- Abtrennen des Feststoffes aus Zellulosefasern und pulverförmigen Katalysator vom Lösungsmittels; und
- Trocknen des abgetrennten Feststoffs aus Zellulosefasern und pulverförmigen Katalysator unter Ausbildung des katalytisch aktiven Filmes.

2. Verfahren nach Anspruch 1, **dadurch gekennzeichnet, dass** die oberflächenmodifizierten Zellulosefasern eine Faserlänge zwischen 0,5 und 3 µm, bevorzugt zwischen 1 und 2 µm, und einen Durchmesser zwischen 15 und 50 nm, bevorzugt zwischen 20 und 40 nm aufweisen.

3. Verfahren nach einem der vorhergehenden Ansprüche, **dadurch gekennzeichnet, dass** die Oberfläche der Zellulosefasern mit anionischen Gruppen, bevorzugt mit Sulfatgruppen, modifiziert ist.

4. Verfahren nach Anspruch 3, **dadurch gekennzeichnet, dass** zwischen 0,05 und 0,3 %, bevorzugt zwischen 0,1 und 0,2 % der Faseroberfläche mit einer anionischen Gruppe, insbesondere mit einer Sulfatgruppe, modifiziert sind.

5. Verfahren nach einem der vorhergehenden Ansprüche, **dadurch gekennzeichnet, dass** der mindestens eine Katalysator ein Photokatalysator ist.

6. Verfahren nach Anspruch 5, **dadurch gekennzeichnet, dass** der Photokatalysator ausgewählt ist aus einer Gruppe umfassend Modifikationen von TiO₂, Pt, WO₃, Kohlenstoffnitrid, Eisen ist.

7. Verfahren nach einem der vorhergehenden Ansprüche. **dadurch gekennzeichnet, dass** der Feststoff mittels Zentrifugation oder Filtration abgetrennt wird.

8. Verfahren nach einem der vorhergehenden Ansprüche, **dadurch gekennzeichnet, dass** der abgetrennte Feststoff aus Zellulosefasern und pulverförmigen Katalysator auf einem Trägermaterial, bevorzugt einem porösen Träger wie ein Zellulosefilter oder Metallschaum wie Nickelschaum, getrocknet wird.

9. Verfahren nach einem der Ansprüche 1-7, **dadurch gekennzeichnet, dass** der abgetrennte Feststoff aus Zellulosefasern und pulverförmigen Katalysator nicht auf einem Trägermaterial getrocknet wird.

10. Katalytisch aktiver Film mit mindestens einem immobilisierten katalytisch aktiven Material herstellbar in einem Verfahren nach einem der vorhergehenden Ansprüche umfassend oberflächenmodifizierte Zellulosefasern und mindestens einen Katalysator, insbesondere mindestens einen Photokatalysator.

11. Film nach Anspruch 10, **dadurch gekennzeichnet, dass** die oberflächenmodifizierten Zellulosefasern eine Faserlänge zwischen 0,5 und 3 µm, bevorzugt zwischen 1 und 2 µm, und einen Durchmesser zwischen 15 und 50 nm, bevorzugt zwischen 20 und 40 nm aufweisen.

12. Film nach einem der Ansprüche 10 - 11, **dadurch gekennzeichnet, dass** die die Oberfläche der Zelluloseofasern mit anionischen Gruppen, bevorzugt mit Sulfatgruppen, modifiziert ist.

13. Film nach einem der Ansprüche 10 - 12 **gekennzeichnet durch** eine Dicke zwischen 50 und 500 µm, bevorzugt zwischen 80 und 300 µm, insbesondere bevorzugt zwischen 100 und 200 µm.

14. Film nach einem der Ansprüche 10 - 13, **dadurch gekennzeichnet, dass** der Film auf einem Trägermaterial, bevorzugt einem porösen Träger wie ein Zellulosefilter oder Metallschaum wie Nickelschaum, angeordnet ist.

15. Verwendung eines Filmes nach einem der Ansprüche zur Photokatalyse, bevorzugt zur photokatalytische Wasserstoffherstellung oder zur Wasserdekontamination.
